(19) Europäisches Patentamt / European Patent Office / Office européen des brevets

(11) **EP 3 060 422 B1**

(12) **FASCICULE DE BREVET EUROPEEN**

(45) Date de publication et mention de la délivrance du brevet:
**20.12.2017 Bulletin 2017/51**

(21) Numéro de dépôt: **14805977.7**

(22) Date de dépôt: **22.10.2014**

(51) Int Cl.:
**B60L 3/04** *(2006.01)*  **H02H 3/087** *(2006.01)*
**H02H 7/18** *(2006.01)*  **H02J 7/00** *(2006.01)*

(86) Numéro de dépôt international:
**PCT/FR2014/052686**

(87) Numéro de publication internationale:
**WO 2015/059408 (30.04.2015 Gazette 2015/17)**

(54) **PROTECTION D'UNE ALIMENTATION INCLUANT PLUSIEURS BATTERIES EN PARALLELE CONTRE UN COURT CIRCUIT EXTERNE**

SCHUTZ EINER STROMVERSORGUNG MIT MEHREREN PARALLEL GESCHALTETEN BATTERIEN GEGEN ÄUSSEREN KURZSCHLUSS

PROTECTING A POWER SUPPLY INCLUDING A PLURALITY OF BATTERIES IN PARALLEL AGAINST AN EXTERNAL SHORT-CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2013 FR 1360482**

(43) Date de publication de la demande:
**31.08.2016 Bulletin 2016/35**

(73) Titulaires:
• **Commissariat à l'Energie Atomique et aux Energies Alternatives**
**75015 Paris (FR)**
• **DCNS**
**75015 Paris (FR)**

(72) Inventeurs:
• **CHATROUX, Daniel**
**F-38470 Teche (FR)**
• **CARCOUET, Sébastien**
**F-38450 Vif (FR)**
• **ECRABEY, Jacques**
**F-07500 Guilherand-Granges (FR)**
• **DURAND, Etienne**
**F-38400 Saint Martin d'Hères (FR)**
• **PIERRE, Nicolas**
**F-29000 Quimper (FR)**
• **GARANS, Cyrille**
**F-56270 Ploemeur (FR)**
• **KERUEL, Bernard**
**F-29470 Plougastel-Daoulas (FR)**

(74) Mandataire: **GIE Innovation Competence Group**
**310, avenue Berthelot**
**69372 Lyon Cedex 08 (FR)**

(56) Documents cités:
**EP-A1- 2 629 392**     **EP-A2- 2 053 717**
**WO-A1-2013/072362**

EP 3 060 422 B1

## Description

L'invention concerne les sources de tension continue de forte puissance, en particulier les sources de tension incluant des batteries d'accumulateurs électrochimiques de puissance connectées en parallèle. Celles-ci peuvent par exemple être utilisées dans le domaine des transports en commun (bus ou trolley-bus), dans le domaine du stockage d'énergies renouvelables, dans le domaine de la navigation maritime ou encore dans les alimentations de secours pour des centrales thermiques ou pour des centres de données.

Les niveaux de tension nécessaires pour de telles applications dépassent souvent plusieurs centaines de Volts. De telles sources de tension sont le plus souvent basées sur des accumulateurs électrochimiques du type lithium ion pour leur capacité à stocker une énergie importante avec un poids et un volume contenus. Les technologies d'accumulateurs de type Lithium ion phosphate de fer LiFePO4 font l'objet d'importants développements du fait d'un niveau de sécurité intrinsèque élevé, au détriment d'une densité de stockage d'énergie un peu en retrait.

Un accumulateur électrochimique a habituellement une tension nominale de l'ordre de grandeur suivant :

3.3 V pour une technologie lithium-ion phosphate de Fer, LiFePO4,
4.2 V pour une technologie de type lithium-ion à base d'oxyde de cobalt.

Par conséquent, pour atteindre les niveaux de tension souhaités, on connecte de nombreux accumulateurs électrochimiques en série. Pour obtenir de fortes capacités, on place de nombreux accumulateurs électrochimiques en parallèle. L'association de plusieurs accumulateurs est appelée une batterie d'accumulateurs.

Dans certaines applications, les puissances mises en oeuvre dépassent 100kWh. Par exemple, les puissances suivantes peuvent être mises en oeuvre dans des batteries de stockage : 200kWh pour la propulsion d'un bus, entre 100kWh et plusieurs MWh pour un stockage associé à un générateur d'énergie renouvelable, plus de 100kWh pour un stockage de secours dans des centrales thermiques ou des parcs informatiques. Il est alors compliqué (notamment en terme d'encombrement) et dangereux de fabriquer et de transporter des sources de tension de très forte capacité en un seul bloc. C'est pourquoi il est usuel de séparer les sources de tension en plusieurs batteries présentant une capacité unitaire inférieure à 50kWh. Plusieurs batteries sont alors connectées en parallèle et/ou en série en fonction du dimensionnement souhaité pour la tension nominale et/ou la capacité de la source de tension, ce qui facilite leur fabrication et leur transport.

Les batteries, en particulier celles utilisant des accumulateurs de type lithium-ion, présentent une très faible résistance interne. Ainsi, en cas de court-circuit aux bornes de la source de tension (typiquement un court-circuit dans l'installation électrique), le courant que les batteries sont susceptibles de fournir peut atteindre des valeurs très élevées. Pour des applications de forte puissance, on utilise des disjoncteurs électromécaniques pour protéger l'installation électrique et les charges électriques contre le court-circuit. De tels disjoncteurs ont un pouvoir de coupure limité. Le pouvoir de coupure est le niveau de courant maximum garanti que le disjoncteur est capable d'ouvrir. Au-delà, de ce niveau, le disjoncteur peut ne pas être capable éteindre l'arc électrique lors de la phase de coupure. Les conséquences peuvent alors être catastrophique : explosion du disjoncteur et d'autres matériels, incendie de l'installation, ou encore explosion des batteries. Les disjoncteurs électromécaniques présentant un pouvoir de coupure supérieur à 30 kA présentent un coût particulièrement élevé. En outre, le pouvoir de coupure des disjoncteurs électromécaniques du commerce est actuellement limité à une valeur de 100 kA. En cas de court-circuit externe, les batteries sont susceptibles de fournir un courant supérieur au pouvoir de coupure du disjoncteur électromécanique ou imposent d'utiliser un disjoncteur électromécanique particulièrement coûteux. La faisabilité d'une installation avec de telles sources de tension continue tout en respectant les normes de protection électrique est ainsi problématique.

Par ailleurs, le courant de court-circuit fourni par les batteries à l'installation électrique doit rester suffisant pour permettre le déclenchement et l'ouverture des disjoncteurs électromécaniques.

La demande de brevet PCT/EP2012/072607 décrit un système d'alimentation comprenant plusieurs batteries en parallèle. Le système d'alimentation alimente une charge électrique par l'intermédiaire d'un disjoncteur. Les batteries en parallèles sont constituées de premières cellules électrochimiques connectées électriquement en série et d'un convertisseur continu/continu dont la sortie est connectée en série avec lesdites premières cellules électrochimiques. Une source secondaire de tension continue applique sa différence de potentiel sur l'entrée du convertisseur. Le convertisseur est régulé en tension.

Un tel système s'avère complètement inadapté pour gérer l'apparition d'un court-circuit externe. Le convertisseur placé en série comprend en effet un interrupteur pour couper l'alimentation du convertisseur, cependant, une diode de roue libre court-circuite le convertisseur lorsque cet interrupteur est ouvert. Lors d'un court-circuit externe, les batteries débitent un courant de court-circuit à travers cette diode de roue libre. Pour un système d'alimentation de forte puissance, le courant de court-circuit peut être supérieur au pouvoir de coupure du disjoncteur du réseau électrique.

L'invention vise à résoudre un ou plusieurs de ces inconvénients. L'invention porte notamment sur une installation électrique comprenant :

- un disjoncteur présentant un pouvoir de coupure PdC et un courant de déclenchement Is;
- une source de tension continue comprenant au moins deux batteries d'accumulateurs électrochimiques connectées en parallèle, la source de tension étant connectée en série avec le disjoncteur, la somme des courants de court-circuit des batteries connectées en parallèle étant supérieure au pouvoir de coupure PdC du disjoncteur, chacune desdites batteries comportant :

  - une première branche incluant les accumulateurs électrochimiques de la batterie et un interrupteur connectés en série;
  - une deuxième branche connectée en parallèle de la première branche et incluant une diode de roue libre ;
  - un ampèremètre mesurant le courant débité par cette batterie;
  - un circuit de commande configuré pour détecter un court-circuit lorsque le courant débité par une batterie est supérieur à un seuil ;

  les circuits de commande étant configurés pour, après la détection d'un court-circuit, maintenir simultanément au moins la majorité desdits interrupteurs ouverts et pour fermer au moins un desdits interrupteurs pour appliquer un courant traversant le disjoncteur supérieur au courant de déclenchement Is et inférieur à son pouvoir de coupure PdC.

Selon une variante, chacune desdites batteries comporte un composant inductif connecté en série entre des première et deuxième bornes de sortie de cette batterie et connecté en série avec les première et deuxième branches.

Selon encore une variante, lesdits ampèremètres mesurent le courant traversant ledit composant inductif.

Selon une autre variante, chacun desdits circuits de commande commande la fermeture de son interrupteur avec un décalage temporel par rapport à la détection d'un court-circuit, ce décalage temporel étant différent pour chacun desdits circuits de commande.

Selon encore une autre variante, le courant de déclenchement Is du disjoncteur est un courant de déclenchement pour un court-circuit d'une durée inférieure à 100 ms.

Selon une variante, l'installation comprend au moins 10 batteries connectées en parallèle.

Selon une autre variante, l'installation électrique comprend un nombre n de batteries connectées en parallèle, et ces batteries présentent chacune un courant de court-circuit $Icc_i$, le pouvoir de coupure PdC du disjoncteur étant au moins 3 fois inférieur à la somme

$$\sum_{i=1}^{n} Icc_i$$

des courants de court-circuit de ces batteries.

Selon encore une variante, ledit disjoncteur présente un pouvoir de coupure PdC au moins égal à 5kA.

Selon une variante, l'installation électrique comprend un réseau électrique connecté en série à la source de tension continue et incluant ledit disjoncteur, ledit réseau électrique stockant une énergie inductive au moins égale à 2000J avec un courant le traversant égal au pouvoir de coupure PdC du disjoncteur ;

Selon encore une autre variante, chacune desdites batteries comprend un premier ensemble d'accumulateurs électrochimiques connectés en série et un deuxième ensemble d'accumulateurs électrochimiques connectés en série, l'installation électrique comprenant en outre un convertisseur continu/continu dont la tension de sortie est connectée en série avec ledit premier ensemble d'accumulateurs électrochimiques, le deuxième ensemble d'accumulateurs électrochimiques appliquant sa différence de potentiel sur une interface d'entrée du convertisseur.

Selon une variante, ledit convertisseur de chacune desdites batteries présente une structure d'abaisseur de tension lors de la décharge dudit deuxième ensemble d'accumulateurs électrochimiques.

Selon encore une variante, pour chacune desdites batteries :

- ladite structure d'abaisseur de tension inclut un abaisseur de tension à découpage comprenant deux interrupteurs commandés connectés en série et aux bornes desquels la différence de potentiel du deuxième ensemble d'accumulateurs électrochimiques est appliquée ;
- ladite inductance et ladite diode de roue-libre appartenant à ladite structure d'abaisseur de tension à découpage ;
- l'interrupteur est connecté entre un noeud de connexion entre les interrupteurs commandés de l'abaisseur et ladite inductance.

Selon une autre variante, ladite deuxième branche de chacune desdites batteries comprend deux diodes de roue libre connectées en série.

Selon encore une autre variante, le dispositif de commande est configuré pour que seulement un desdits interrupteurs soit maintenu fermé en simultané après la détection d'un court-circuit.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un premier mode de réalisation d'une installation électrique selon l'invention ;

- la figure 2 est une représentation schématique d'un exemple de batterie utilisable dans une installation électrique selon l'invention ;
- la figure 3 est un premier exemple d'interrupteur utilisable dans une batterie pour la mise en oeuvre de l'invention ;
- la figure 4 est un deuxième exemple d'interrupteur utilisable dans une batterie pour la mise en oeuvre de l'invention ;
- la figure 5 est un schéma électrique équivalent d'une installation électrique durant une étape de fonctionnement en court-circuit ;
- la figure 6 est un diagramme illustrant un autre exemple de régulation de courant de court-circuit ;
- la figure 7 est une représentation schématique d'un autre exemple de batterie utilisable dans une installation électrique selon l'invention ;
- la figure 8 est une représentation schématique d'un autre exemple de batterie utilisable dans une installation électrique selon l'invention ;
- la figure 9 est une représentation schématique de la batterie de la figure 8 avec un convertisseur abaisseur de tension ;
- la figure 10 illustre un exemple de diagramme de déclenchement d'un disjoncteur électronique ;
- la figure 11 illustre un exemple de source de tension continue, comprenant plusieurs étages en série, chaque étage comprenant plusieurs batteries connectées en parallèle.

L'invention propose une installation électrique comportant une source de tension continue munie de batteries d'accumulateurs électrochimiques connectées en parallèle. La source de tension continue formée étant connectée en série avec un disjoncteur dont le pouvoir de coupure est inférieur à la somme des courants de court-circuit de ces batteries. Chaque batterie comporte deux branches en parallèle : une première branche avec des accumulateurs électrochimiques et un interrupteur en série, et une deuxième branche avec une diode de roue libre.

Un ampèremètre mesure le courant débité par chaque batterie pour détecter l'apparition d'un court-circuit externe. L'état de conduction des interrupteurs est commandé par un circuit de commande respectif. Lors de la détection d'un court-circuit, la majorité des interrupteurs est maintenue ouverte pour que le courant appliqué au disjoncteur soit inférieur à son courant de coupure, et on commande la fermeture d'au moins un interrupteur pour appliquer au disjoncteur un courant supérieur à son courant de déclenchement. On garantit ainsi la continuité de service du fait de la présence des circuits de commande respectifs, sans pour autant risquer de créer de perturbations électromagnétiques trop importantes sur le réseau électrique alimenté.

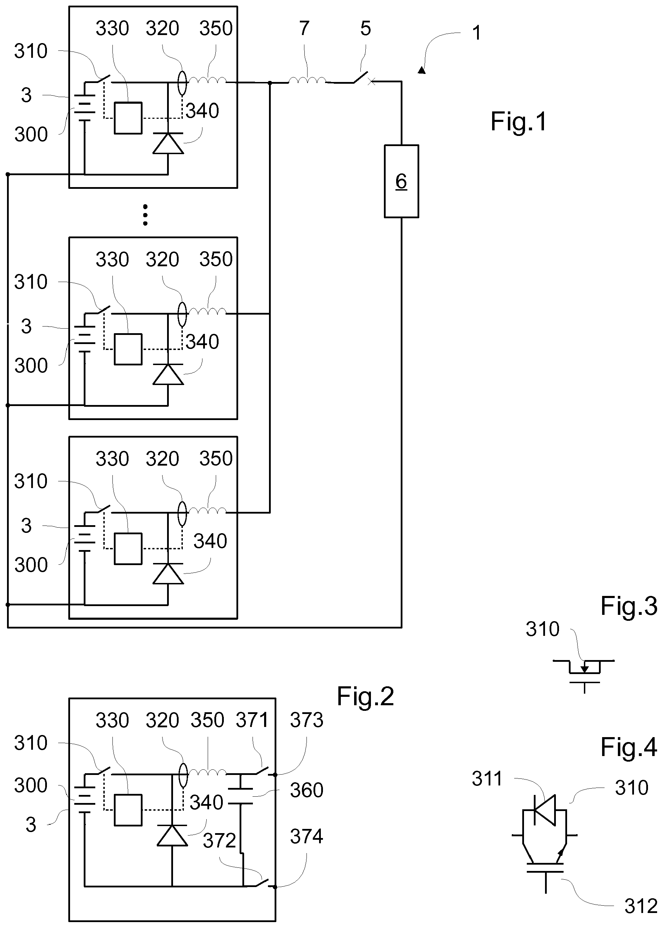

La figure 1 est une représentation schématique d'un exemple de mode de réalisation d'une installation électrique 1 selon l'invention. L'installation électrique 1 comprend un disjoncteur 5 et une charge 6 (qui peut être en pratique un réseau électrique complet incluant une multitude de charges) connectée en série avec le disjoncteur 5. L'inductance parasite du réseau électrique (par exemple due au câblage ou aux interconnexions) de la charge 6 est ici représentée sous la forme d'une inductance 7 connectée en série avec le disjoncteur 5 et la charge 6. L'installation électrique 1 comprend en outre une source de tension continue. La source de tension continue comprend un ensemble de batteries 3 (sous forme de modules indépendants) connectées électriquement en parallèle. La source de tension continue est connectée en série avec le disjoncteur 5 et la charge 6, par exemple par l'intermédiaire de connexions électriques de puissance, de façon connue en soi.

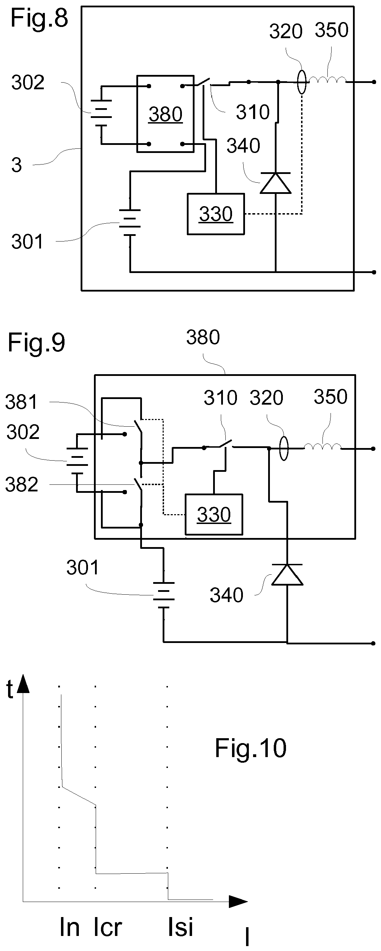

Le disjoncteur 5 comporte un pouvoir de coupure PdC et un courant de déclenchement Is. On pourra par exemple considérer le courant de déclenchement Is du disjoncteur 5 pour un déclenchement sur court-circuit avec une durée inférieure à 100 ms, afin de garantir une réponse rapide de l'installation électrique 1 à un court-circuit. D'autres courants de déclenchement peuvent aussi être envisagés, comme détaillé en référence à la figure 10.

Dans l'installation électrique 1, la somme des courants de court-circuit des batteries 3 est supérieure au pouvoir de coupure PdC du disjoncteur 5. Avec un nombre n de batteries 3 connectées en parallèle et désignées par un indice i, on désigne par Icci le courant de court-circuit d'une batterie i. Le pouvoir de coupure PdC vérifie alors l'inégalité suivante :

$$PdC < \sum_{i=1}^{n} Icc_i$$

L'invention s'avère particulièrement avantageuse lorsqu'au moins 10 batteries 3 sont connectées en parallèle. L'invention s'avère en outre particulièrement avantageuse lorsque les batteries 3 sont de type lithium ion, ces batteries présentant une résistance interne relativement réduite et par conséquent un courant de court-circuit élevé, par exemple, 30 à 100 fois le courant nominal de ces batteries.

Dans un souci de simplification, on partira de l'hypothèse d'un ensemble de n batteries 3 présentant un même courant de court-circuit Icc. L'installation électrique vérifie ainsi la relation PdC< n * Icc.

Ainsi, si toutes les batteries 3 débitaient leur courant de court-circuit dans le disjoncteur 5, le disjoncteur 5 ne pourrait pas garantir son ouverture. Le courant de court-circuit d'une batterie 3 correspond au courant maximum qu'elle est capable de débiter avec une résistance nulle entre ses bornes, ce courant étant alors limité uniquement par l'impédance interne de cette batterie 3.

L'invention s'avère particulièrement avantageuse lorsque le courant que pourraient débiter l'ensemble des batteries 3 est très supérieur au pouvoir de coupure du disjoncteur 5. Ainsi, l'invention s'avère particulièrement avantageuse lorsque la relation suivante est vérifiée :

$$PdC < 3 * \sum_{i=1}^{n} Icc_i$$

Chaque batterie 3 comprend un ensemble d'accumulateurs électrochimiques 300 connectés en série et/ou en parallèle. Dans la variante de la figure 1, chacune des batteries 3 connectées en parallèle comporte un interrupteur commandé 310. Chacune des batteries 3 comporte :

- une première branche incluant l'ensemble d'accumulateurs électrochimiques 300 connectés en série avec un interrupteur commandé 310. L'interrupteur 310 est donc susceptible d'ouvrir la connexion entre les accumulateurs électrochimiques 300 et le disjoncteur 5 ;
- une deuxième branche connectée en parallèle avec la première branche et incluant une diode de roue-libre 340.

Les première et deuxième branches sont ainsi connectées entre des bornes basse tension et haute tension de la batterie 3. L'inductance 350 de chaque batterie 3 modélise la somme d'inductances parasites de connexion de la batterie 3 et d'un composant inductif connecté entre la borne haute tension de la batterie 3 et les première et deuxième branches. La batterie 3 comporte ainsi avantageusement un tel composant inductif, pour faciliter la calibration de la valeur d'inductance. Un composant inductif désigne un composant électronique destiné par sa construction à avoir une certaine valeur d'inductance. Ce composant électronique sera par exemple une bobine. Avantageusement, la valeur d'inductance d'un tel composant inductif est supérieure à la valeur d'inductance parasite de connexion de la batterie 3. L'anode de la diode 340 est ainsi connectée entre la borne basse tension de la batterie 3 et une borne de l'inductance 350. L'inductance 350 permet de ralentir l'augmentation du courant en cas de court-circuit. Afin d'éviter une saturation, un composant inclus dans l'inductance 350 sera avantageusement une inductance à air.

Chaque batterie 3 comporte en outre un ampèremètre 320 pour mesurer le courant débité par la batterie 3. Dans le mode de réalisation illustré, l'ampèremètre 320 mesure le courant à travers l'inductance 350. Chaque batterie 3 comprend en outre un circuit de commande 330, configuré pour commander sélectivement l'ouverture de l'interrupteur 310. Le circuit de commande 330 récupère la valeur de courant mesurée par l'ampèremètre 320.

Le circuit de commande 330 comporte deux modes de fonctionnement. Lorsque le courant mesuré par l'ampèremètre 320 est inférieur au seuil de déclenchement sur court-circuit, le circuit de commande 330 est en mode de fonctionnement normal. Le circuit de commande 330 maintient alors l'interrupteur 310 fermé, de sorte que la batterie 3 puisse alimenter la charge 6. La conduction de la diode 340 n'est pas utilisée dans le mode de fonctionnement normal.

Lorsque le courant mesuré par l'ampèremètre 320 est supérieur au seuil de déclenchement sur court-circuit désigné par Ib, le circuit de commande 330 est en mode de fonctionnement de court-circuit. Lors de l'apparition d'un court-circuit externe, le courant débité par chacune des batteries 3 augmente rapidement, la croissance de ce courant étant principalement dépendante de l'inductance de court-circuit. Lorsque le courant mesuré par un ampèremètre 320 dépasse le seuil Ib, le circuit de commande 330 associé passe en mode de fonctionnement de court-circuit. Durant ce mode de fonctionnement, au moins la majorité des interrupteurs 310 sont maintenus simultanément ouverts et un ou plusieurs interrupteurs 310 sont sélectivement fermés pour appliquer un courant à travers le disjoncteur 5, de sorte que ce courant soit supérieur à son courant de déclenchement et inférieur à son pouvoir de coupure.

Ainsi, on peut détecter un court-circuit externe à la source de tension continue en un temps très bref et maintenir un courant à travers le disjoncteur suffisamment élevé pour le déclencher et suffisamment bas pour garantir son ouverture. Le disjoncteur assure donc encore ses fonctions de sécurité, telles que d'ouvrir le circuit (et d'absorber l'énergie inductive à l'ouverture) en présence d'un court-circuit, d'assurer une coupure physique du circuit, et éventuellement de permettre à l'utilisateur de vérifier l'état de la coupure. Un disjoncteur ayant un pouvoir de coupure inférieur à la somme des courants de court-circuit des batteries en parallèle peut être utilisé tout en garantissant la sécurité de fonctionnement de l'installation électrique. Par conséquent, la faisabilité d'installations électriques de forte puissance est rendue possible avec des disjoncteurs existants ou des disjoncteurs moins coûteux peuvent être utilisés. Une architecture simple de l'installation électrique peut être conservée. En outre, la sélectivité de déclenchement des disjoncteurs de moindre calibre en aval d'un disjoncteur principal est conservée.

Lorsqu'un interrupteur 310 est maintenu ouvert, la diode 340 associée est traversée par un courant de roue libre. Le courant traversant l'inductance 350 associée décroît alors. Les circuits de commande 330 peuvent être programmés pour ouvrir l'interrupteur 310 dès que le dépassement du seuil Ib est détecté. Ainsi, dès qu'un court-circuit est détecté, l'ensemble des interrupteurs 310 seront ouverts, de sorte que le courant traversant le disjoncteur 5 commence par décroître.

Pour appliquer un courant à travers le disjoncteur 5 supérieur à son courant de déclenchement, les circuits de commande 330 sont configurés pour fermer au moins transitoirement un des interrupteurs 310, afin de faire croître ce courant. Une régulation du courant à travers le disjoncteur 5 peut par exemple être réalisée en fermant un ou plusieurs interrupteurs 310 lorsqu'un courant à travers le disjoncteur 5 atteint un seuil bas. En garantissant qu'au moins la moitié des interrupteurs 310 sont maintenus ouverts, on limite l'amplitude des variations de tension sur le réseau électrique, aux bornes de la source de tension continue. On évite notamment qu'un ensemble de circuits de commande 330 indépendants, mais ayant une même logique, ferment simultanément l'ensemble des interrupteurs 310, ce qui se traduirait par une forte variation de tension transitoire aux bornes de la source de tension continue.

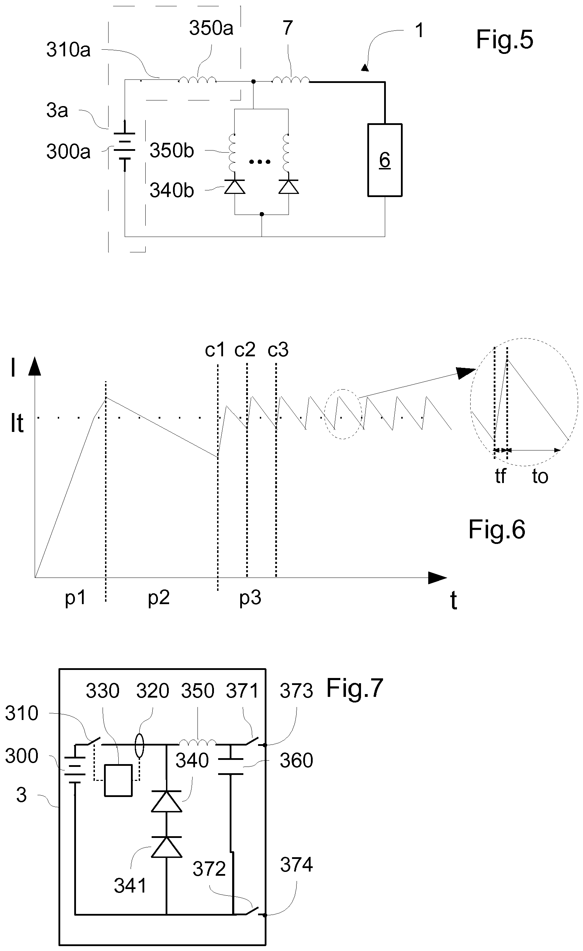

La figure 5 illustre schématiquement le fonctionnement de l'installation électrique 1 lorsqu'un interrupteur 310a est maintenu fermé et que tous les autres interrupteurs sont maintenus ouverts. Pour les batteries ayant leur interrupteur ouvert, les diodes de roue libres 340b permettent le passage d'un courant à travers les inductances 350b. Les accumulateurs électrochimiques 300a de la batterie 3a débitent à travers l'inductance associée 350a. Le noeud de connexion de l'inductance 350a avec les inductances 350b des autres batteries 3 voient alors une variation de tension réduite.

En effet, un diviseur de tension inductif est formé entre l'inductance 350a et les inductances 350b. Plus le nombre d'inductances 350b connectées en parallèle est important (correspondant au nombre d'interrupteurs 310 qui restent ouverts en simultané), plus la tension sur le noeud de connexion est basse. Ainsi, lors de l'ouverture ultérieure de l'interrupteur 310a, le noeud de connexion subit une faible variation de tension, et ce pendant toute la durée du court-circuit.

Avec au moins la moitié des interrupteurs maintenus ouverts simultanément, on peut garantir que la tension sur le noeud de connexion ne dépassera pas la tension aux bornes des accumulateurs électrochimiques, même avec une crête de résonance transitoire. L'invention s'avère particulièrement avantageuse, lorsqu'au moins 80% des interrupteurs 310 sont maintenus ouverts en mode de fonctionnement de court-circuit.

On limite ainsi la génération de perturbations électromagnétiques à haute fréquence par la source de tension continue, ces perturbations pouvant perturber le fonctionnement de la charge 6. Le dimensionnement d'un éventuel circuit de filtrage (typiquement un condensateur de filtrage ou un circuit RC série) contre les perturbations électromagnétiques peut ainsi être considérablement réduit.

Pour prendre une application pratique, le câblage d'un réseau électrique peut présenter une inductance parasite de l'ordre de $10\mu H$ dans une installation telle qu'un navire. La source de tension continue comprend par exemple 50 batteries 3 connectées en parallèle, dont l'impédance 350 est de l'ordre de $10\mu H$. En supposant que chaque batterie 3 est limitée à un courant de court-circuit de 1kA, l'impédance parasite du réseau électrique peut être traversée par un courant de 350kA. Alors que chaque impédance 350 est amenée à stocker une énergie de 5J, l'inductance parasite du réseau électrique est amenée à stocker 12500J. Une telle énergie stockée nécessiterait un dimensionnement considérable d'un circuit de filtrage contre les perturbations électromagnétiques, si tous les interrupteurs 310 devraient être ouverts et fermés simultanément. Des circuits de filtrage ainsi dimensionnés auraient en outre un impact négatif significatif sur le comportement en court-circuit de l'installation électrique 1 (amplitude du courant de court-circuit et risque d'oscillation).

La figure 6 est un diagramme illustrant le courant traversant le disjoncteur 5 avec une installation électrique 1 selon un exemple de mise en oeuvre de l'invention, durant un court-circuit externe. Durant une première phase P1, les interrupteurs 310 des différentes batteries 3 sont maintenus fermés et le courant traversant le disjoncteur 5 croit. À la fin de la phase P1, les circuits de commande 330 détectent que le courant débité par leur batterie 3 respective dépasse le seuil Ib. L'échelle des variations de courant après la phase P1 est volontairement amplifiée dans un souci de lisibilité. Durant une deuxième phase P2, tous les circuits de commande 330 ouvrent leur interrupteur respectif 310. Le courant débité à travers le disjoncteur 5 provient de la conduction de l'ensemble des diodes de roue libre 350. Le courant traversant le disjoncteur 5 décroît progressivement jusqu'à une valeur It supérieure au seuil de détection Is du disjoncteur 5. La troisième phase P3 commence lorsque le courant traversant le disjoncteur 5 atteint la valeur It. Durant la troisième phase, les différentes batteries 3 assurent séquentiellement la régulation du courant traversant le disjoncteur 5. A l'instant C1, une première batterie assure la régulation de ce courant, puis à l'instant C2, une troisième batterie assure la régulation de ce courant...

Lorsqu'une batterie 3 assure la régulation du courant à travers le disjoncteur 5, son interrupteur 310 est fermé pendant une durée tf, jusqu'à ce que le courant à travers son inductance 350 atteigne un seuil haut. L'interrupteur 310 est alors ouvert pendant une durée t0, jusqu'à ce que le courant atteigne la valeur It. Une autre batterie 3 assure alors la régulation avec la fermeture de son interrupteur 310, la régulation séquentielle se poursuivant alors avec les différentes batteries 3.

Les circuits de commande 330 peuvent réaliser des régulations de courant séquentielles, sans pour autant prévoir une communication entre eux. Ainsi, les circuits 330 peuvent commander une fermeture de leur interrupteur 310 avec une même fréquence, chaque circuit de commande 330 réalisant cependant la fermeture de son interrupteur 310 avec un décalage distinct par rapport à la détection du seuil de déclenchement Ib (programmé par exemple durant l'assemblage de la source de tension continue). On s'assure ainsi qu'un seul interrupteur 310 est fermé à un instant donné durant la troisième phase P3.

Dans cet exemple, on a décrit seulement la fermeture en simultané d'un seul interrupteur 310. Une seule fermeture d'interrupteur en simultané peut s'avérer suffisante, cette fermeture servant essentiellement à faire croître le courant à travers le disjoncteur 5 par rapport à un niveau supérieur à It maintenu par la conduction des diodes de roue libre. On peut cependant également envisager de fermer simultanément plusieurs interrupteurs 310, afin d'assurer une redondance durant les croissances de courant de la troisième phase P3.

La fermeture des interrupteurs 310 peut être synchronisée sur un signal d'horloge centralisé de la source de tension continue, chaque circuit de commande 330 étant alors muni d'un compteur pour réaliser la fermeture avec un décalage distinctif.

Si l'origine du court-circuit externe disparaît, les batteries 3 débitent un courant plus réduit et les circuits de commande 330 commandent alors un basculement en mode de fonctionnement normal. Les interrupteurs 310 sont alors fermés.

Différents modes de commande pour des circuits de commande 330 indépendants peuvent être envisagés. Par exemple, on peut prévoir que chaque circuit de commande 330 fasse l'objet d'un réglage en usine par exemple pour que chaque circuit de commande 330 présente une horloge propre avec une fréquence de fermeture de l'interrupteur 310 distincte, pour que chaque circuit de commande 330 présente une même fréquence d'horloge mais avec un décalage distinct, ou encore une durée aléatoire de temps d'ouverture des interrupteurs 310.

Chaque circuit de commande 330 peut également réaliser un tirage aléatoire de façon autonome pour déterminer à intervalle régulier si son interrupteur 310 doit être fermé. Pour un nombre important de batteries 3, avec un rapport cyclique de fermeture réduit d'interrupteurs 310, la probabilité d'une fermeture simultanée de plus de la moitié des interrupteurs 310 en mode de court-circuit est extrêmement faible. Avec des tirages aléatoires, même si la probabilité est infime, plus de la moitié des interrupteurs 310 pourraient transitoirement être fermés en simultané. On considèrera que la condition de maintien de plus de la moitié des interrupteurs 310 ouverts sera vérifiée, dès lors que ce cas de figure a une probabilité inférieure à $10^{-4}$ à chaque tirage.

Un décalage naturel entre les fermetures des interrupteurs 310 peut également être obtenu en calibrant différemment les inductances 350 des différentes batteries 3. Avec différentes valeurs d'inductances, chaque batterie aura une pente différente durant l'augmentation du courant en phase de court-circuit. Par conséquent, le courant débité par chacune des batteries 3 atteindra le seuil de déclenchement Ib à un instant différent. Les fermetures des interrupteurs 310 pourront cependant être réalisées à une même fréquence pour les différentes batteries 3.

Pour décaler les fermetures des transistors 310, il est également possible de réaliser une régulation par hystérésis dans chaque batterie 3, en fixant des seuils hauts et bas différents pour chacune d'entre elles.

Des exemples de fixation du seuil de déclenchement Ib peuvent être les suivants :

Ib = Is / n, avec Is le seuil de déclenchement du disjoncteur 5 et n le nombre de batteries 3 connectées en parallèle ;
Ib = 1,5 * Is / n ;
Ib = PdC / 2n, avec PdC le pouvoir de coupure du disjoncteur 5 et n le nombre de batteries 3 connectées en parallèle.

La figure 2 est une représentation schématique d'une variante de batterie 3 utilisable dans une installation électrique 1. La batterie 3 selon cette variante comporte avantageusement un condensateur de découplage 360. Le condensateur 360 est connecté en parallèle des première et deuxième branches. Un tel condensateur 360 permet avantageusement de limiter les effets des différentes inductances parasites sur le fonctionnement du circuit de commande 330. Bien que toutes les variantes de batteries 3 décrites n'incluent pas un condensateur de découplage, une batterie 3 d'une installation 1 selon l'invention peut bien entendu inclure un tel condensateur de découplage.

Dans la variante de la figure 2, la batterie 3 comporte des contacteurs 371 et 372. Ces contacteurs 371 et 372 sont connectés en série avec les première et deuxième branches, entre la borne haute tension 373 et la borne basse tension 374. Ces contacteurs 371 et 372 permettent de connecter/déconnecter sélectivement la batterie 3 de l'installation électrique 1.

Pour permettre à la fois la décharge et la charge de la batterie 3, l'interrupteur 310 est avantageusement bidirectionnel en courant. La charge de la batterie 3 peut alors être réalisée soit par un chargeur connecté à une alimentation électrique externe, soit à partir d'un courant renvoyé par la charge 6 (par exemple un freinage régénératif pour un moteur électrique).

La figure 3 illustre un premier exemple d'interrupteur 310 bidirectionnel en courant. L'interrupteur 310 comporte ici un transistor MOS canal N dont la source est connectée à la cathode de la diode 340 et dont la grille est commandée par le circuit de commande 330.

La figure 4 illustre un deuxième exemple d'interrupteur 310 bidirectionnel en courant. L'interrupteur 310 comporte ici un transistor IGBT 312 et une diode 311 montée en antiparallèle.

Différents types de transistors pourront être utilisés comme composants de conduction/coupure pour la fonction d'interrupteur 310. L'utilisation de transistors permet notamment d'obtenir des vitesses d'ouverture suffisamment rapides des interrupteurs 310 avant que l'intensité traversant le disjoncteur 5 n'atteigne son pouvoir de coupure.

La figure 7 est une représentation schématique d'une variante de batterie 3 utilisable dans une installation électrique 1. La batterie 3 selon cette variante comporte avantageusement deux diodes de roue libre 340 et 341 connectées en série. Les diodes 340 et 341 sont ainsi connectées entre la borne basse tension de la batterie 3 et une borne de l'inductance 350. Le mode de défaillance d'une diode étant généralement le court-circuit, la présence des deux diodes 340 et 341 connectées en série permet à la fois d'assurer la continuité de fonctionnement de la batterie 3 mais également d'éviter un court-circuit aux bornes de cette batterie 3 en cas de défaillance d'une de ces diodes.

Cette variante permet également de réaliser un test du circuit de commande, des diodes et de l'interrupteur.

Pour réaliser un test des diodes, on peut réaliser le processus suivant :

- fermer l'interrupteur 310 ;
- ouvrir les contacteurs 371 et 372 ;
- mesurer la tension intermédiaire entre les diodes de roue libre 340 et 341. Cette tension doit ici être de valeur intermédiaire entre 0 et Vbat (avec Vbat la tension aux bornes des accumulateurs 300). Cette valeur est fonction de l'écart de courant de fuite des deux diodes. Si cette tension est nulle, la diode connectée au pôle négatif de la batterie est en court-circuit. Si cette tension est égale à Vbat, la seconde diode est en court-circuit. Du fait des courants de fuite différents des diodes 340 et 341, pour s'assurer d'une répartition des tensions aux bornes des diodes 340 et 341, il peut être ajouté des résistances de forte valeur en parallèle des diodes. De manière préférée, on peut aussi adjoindre deux résistances de valeurs identiques en parallèle des deux diodes qui laissent passer un courant plusieurs fois supérieur au courant de fuite des diodes. Dans ce cas, la tension doit être de l'ordre de Vbat/2 ;
- mesurer la tension aux bornes des diodes de roue libre 340 et 341. Cette tension doit ici être égale à Vbat;

Pour réaliser un test de l'interrupteur 310 et du circuit de commande, on peut réaliser le processus suivant :

- fermer les contacteurs 371 et 372 ;
- ouvrir l'interrupteur 310 ;
- mesurer la tension aux bornes des diodes de roue libre 340 et 341. Cette tension doit ici être inférieure à Vbat et égale à 2 * Vd, en présence d'un courant de roue libre;
- en présence d'un courant de roue libre, mesurer la tension intermédiaire entre les diodes de roue libre 340 et 341. Cette tension doit ici être égale à Vd, avec Vd la tension de seuil des diodes 340 et 341 (supposée identique pour les diodes 340 et 341) ;
- fermer l'interrupteur 310 ;
- mesurer la tension aux bornes des diodes de roue libre 340 et 341. Cette tension doit ici être égale à Vbat.

La figure 8 est une représentation schématique d'une autre variante de batterie 3 pour l'installation électrique 1. Cette batterie 3 comprend des premiers accumulateurs électrochimiques 301 connectés en série et un convertisseur continu/continu 380. Une autre source de tension continue est connectée sur l'entrée du convertisseur 380. Cette autre source de tension continue comprend ici des seconds accumulateurs électrochimiques 302. La sortie du convertisseur 380 est connectée électriquement en série avec les accumulateurs électrochimiques 301.

Une telle batterie 3 permet d'adapter sa tension à la tension des autres batteries 3 auxquelles elle doit être connectée en parallèle. De telles batteries s'avèrent particulièrement avantageuses lorsqu'elles présentent des caractéristiques différentes (du fait d'un état de charge, de dispersions de fabrication, d'un âge ou d'une usure différents). Une telle batterie 3 permet par ailleurs d'adapter sa tension avec des pertes réduites, pour un coût et un encombrement optimisés. En effet, la conversion n'est ici réalisée que sur la tension des accumulateurs électrochimiques 302, dont la tension nominale est typiquement au moins cinq fois inférieure à la tension nominale des accumulateurs électrochimiques 301.

La figure 9 illustre une batterie 3 avec une variante d'un convertisseur 380. Le convertisseur 380 est ici basé sur l'utilisation d'interrupteurs 381 et 382 et de l'inductance 350. Les interrupteurs 381 et 382 sont connectés en série et commandés par le circuit de commande 330. L'inductance 350 est connectée entre la borne haute tension de la batterie 3 et un noeud de connexion entre les interrupteurs 381 et 382, par l'intermédiaire de l'interrupteur 310. L'ensemble d'accumulateurs électrochimiques 302 est connecté au noeud de connexion par l'intermédiaire respectivement de l'interrupteur 381 et de l'interrupteur 382.

On désigne par $\alpha$ le rapport cyclique de fermeture de l'interrupteur 381 défini par le circuit de commande 330. Le circuit de commande 330 définit un rapport cyclique de fermeture de l'interrupteur 382 de $(1-\alpha)$. De façon connue en soi, le circuit de commande maintient l'interrupteur 381 ouvert et l'interrupteur 382 fermé en simultané, et réciproquement. Le circuit de commande 330 définit la valeur du rapport cyclique $\alpha$ en fonction de la tension de sortie souhaitée pour la batterie 3.

Le convertisseur 380 est donc abaisseur de tension en mode de décharge des accumulateurs 302 et élévateur de tension en mode de charge des accumulateurs 302.

Les interrupteurs 381 et 382 du convertisseur 380 sont de préférence du type normalement ouvert.

Le disjoncteur 5 est par exemple un disjoncteur magnétothermique ou un disjoncteur électronique. Un disjoncteur électronique est muni :

- d'un ampèremètre mesurant le courant le traversant ;
- d'un organe électromécanique permettant l'ouverture entre les bornes du disjoncteur ;

- d'un circuit électronique traitant la mesure de courant de l'ampèremètre et générant un ordre d'ouverture de l'organe électromécanique en fonction de la mesure de courant.

La figure 10 illustre un exemple de diagramme de déclenchement d'un tel disjoncteur électronique. Le disjoncteur électronique comporte ici trois seuils de déclenchement :

- le premier seuil de déclenchement In pour une surcharge de courant limité mais de longue durée (typiquement entre plusieurs dizaines de secondes et plusieurs minutes). Ce seuil de déclenchement est analogue au seuil de déclenchement thermique d'un disjoncteur magnétothermique ;
- le deuxième seuil de déclenchement Icr pour une surcharge de courant relativement importante et de durée moyenne (typiquement entre 100 ms et quelques secondes). Ce seuil de déclenchement est analogue au seuil de déclenchement magnétique d'un disjoncteur magnétothermique ;
- le troisième seuil de déclenchement Isi pour un court-circuit franc, avec une détection quasi instantanée et une ouverture intervenant moins de 100 ms après cette détection.

Le troisième seuil de déclenchement du disjoncteur 5 peut être retardé pour permettre à des disjoncteurs de plus petit calibre d'ouvrir des branches en aval, afin de garantir la sélectivité du circuit électrique.

Dans les exemples détaillés auparavant, l'ampèremètre 320 mesure le courant série traversant l'inductance 350. Cependant, on peut également envisager de mesurer le courant traversant la première branche, cette mesure ne fournissant cependant pas la valeur de courant traversant l'inductance 350 durant l'ouverture de l'interrupteur 310.

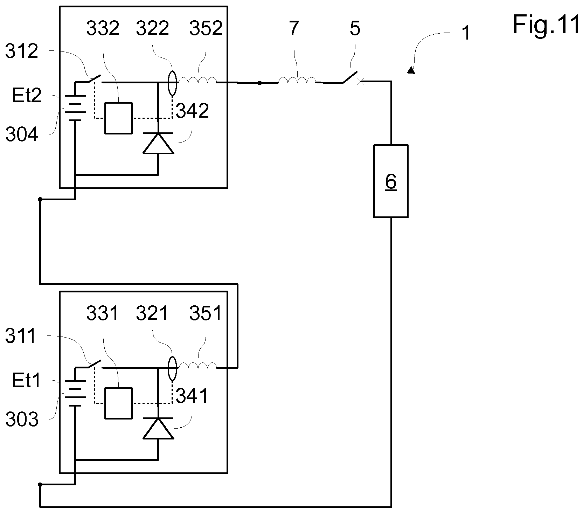

La figure 11 illustre un exemple de source de tension continue, comprenant plusieurs étages en série, chaque étage comprenant plusieurs batteries connectées en parallèle. La source de tension continue comporte ici un premier étage Et1 et un deuxième étage Et2 connectés en série. Dans un but de simplification, on a illustré uniquement une des batteries connectées en parallèle dans chaque étage. Ces batteries présentent la même structure que celles détaillées en référence à la figure 1. La batterie illustrée pour l'étage Et1 comporte ainsi un ensemble d'accumulateurs électrochimiques 303, un interrupteur 311, un ampèremètre 321, un circuit de commande 331, une diode 341, une inductance 351. La batterie illustrée pour l'étage Et2 comporte ainsi un ensemble d'accumulateurs électrochimiques 304, un interrupteur 312, un ampèremètre 322, un circuit de commande 332, une diode 342, une inductance 352.

Avantageusement, les étages Et1 et Et2 sont configurés pour présenter des courants de court-circuit régulés différents ou pour présenter des seuils de détection de court-circuit différents.

Soit It1 et It2, les courants de court-circuit respectifs régulés dans les étages Et1 et Et2, Ib1 et Ib2, les seuils de courant pour la détection d'un court-circuit, avec It1 > It2 et Ib1 > Ib2. Lors de l'apparition d'un court-circuit, celui-ci est détecté plus tôt dans l'étage Et2, dès que le seuil Ib2 est atteint dans chaque batterie de l'étage Et2. Les interrupteurs 312 s'ouvrent avant les interrupteurs 311. Un courant de court-circuit débité par l'étage Et1 traverse alors les diodes de roue libre 342 de l'étage Et2. Les interrupteurs 312 restent ouverts car le courant de court-circuit débité à travers les diodes de roue-libre dépasse le seuil de régulation It2. Lorsque le courant de court-circuit atteint Ib1 dans chaque batterie de l'étage Et1, les interrupteurs 311 s'ouvrent également. La régulation est alors en pratique réalisée dans l'étage Et1.

Pour le cas particulier d'une commande par hystérésis des interrupteurs 312 par les circuits de commande 332, une fermeture périodique des interrupteurs 312 peut être réalisée mais ces interrupteurs sont immédiatement ouverts, du fait que le courant les traversant est supérieur au seuil Ib2.

Une telle conception avec les étages Et1 et Et2 configurés pour présenter des courants de court-circuit régulés différents ou pour présenter des seuils de détection de court-circuit différents permet notamment d'éviter une éventuelle oscillation entre étages.

Les diodes de roue libre 342 doivent alors être dimensionnées pour résister au courant de court-circuit de l'étage Et1.

**Revendications**

1. Installation électrique (1), comprenant:

   - un disjoncteur (5) présentant un pouvoir de coupure, abréviation PdC, et un courant de déclenchement, abréviation Is,
   - une source de tension continue comprenant au moins deux batteries d'accumulateurs électrochimiques (3) connectées en parallèle, la source de tension étant connectée en série avec le disjoncteur ;
   **Caractérisée en ce que** la somme des courants de court-circuit des batteries connectées en parallèle est supérieure au pouvoir de coupure PdC du disjoncteur (5), chacune desdites batteries comportant :

   - une première branche incluant les accumulateurs électrochimiques (300) de la batterie et un interrupteur (310) connectés en série;
   - une deuxième branche connectée en parallèle de la première branche et incluant une diode de roue libre (340) ;

- un ampèremètre (320) mesurant le courant débité par cette batterie ;
- un circuit de commande (330) configuré pour détecter un court-circuit lorsque le courant débité par une batterie est supérieur à un seuil ;

les circuits de commande étant configurés pour, après la détection d'un court-circuit, maintenir simultanément au moins la majorité desdits interrupteurs (310) ouverts et pour fermer au moins un desdits interrupteurs pour appliquer un courant traversant le disjoncteur (5) supérieur au Is et inférieur à son PdC.

2.  Installation électrique (1) selon la revendication 1, dans laquelle chacune desdites batteries (3) comporte un composant inductif (350) connecté en série entre des première et deuxième bornes de sortie de cette batterie et connecté en série avec les première et deuxième branches.

3.  Installation électrique (1) selon la revendication 2, dans laquelle lesdits ampèremètres (320) mesurent le courant traversant ledit composant inductif (350).

4.  Installation électrique (1) selon l'une quelconque des revendications précédentes, dans laquelle chacun desdits circuits de commande (330) commande la fermeture de son interrupteur (310) avec un décalage temporel par rapport à la détection d'un court-circuit, ce décalage temporel étant différent pour chacun desdits circuits de commande.

5.  Installation électrique (1) selon l'une quelconque des revendications précédentes, dans lequel le courant de déclenchement Is du disjoncteur (5) est un courant de déclenchement pour un court-circuit d'une durée inférieure à 100 ms.

6.  Installation électrique (1) selon l'une quelconque des revendications précédentes, comprenant au moins 10 batteries (3) connectées en parallèle.

7.  Installation électrique (1) selon l'une quelconque des revendications précédentes, comprenant un nombre n de batteries (3) connectées en parallèle, et dans laquelle ces batteries présentent chacune un courant de court-circuit $Icc_i$, le pouvoir de coupure PdC du disjoncteur (5) étant au moins 3 fois inférieur à la somme

$$\sum_{i=1}^{n} Icc_i$$

des courants de court-circuit de ces batteries.

8.  Installation électrique selon l'une quelconque des revendications précédentes, dans lequel ledit disjoncteur présente un pouvoir de coupure PdC au moins égal à 5kA.

9.  Installation électrique (1) selon l'une quelconque des revendications précédentes, comprenant un réseau électrique connecté en série à la source de tension continue et incluant ledit disjoncteur (5), ledit réseau électrique stockant une énergie inductive au moins égale à 2000J avec un courant le traversant égal au pouvoir de coupure PdC du disjoncteur (5).

10. Installation électrique (1) selon l'une quelconque des revendications précédentes, dans laquelle chacune desdites batteries (3) comprend un premier ensemble d'accumulateurs électrochimiques connectés en série (301) et un deuxième ensemble d'accumulateurs électrochimiques connectés en série (302), l'installation électrique comprenant en outre un convertisseur continu/continu (380) dont la tension de sortie est connectée en série avec ledit premier ensemble d'accumulateurs électrochimiques (301), le deuxième ensemble d'accumulateurs électrochimiques (302) appliquant sa différence de potentiel sur une interface d'entrée du convertisseur (380).

11. Installation électrique (1) selon la revendication 10, dans laquelle ledit convertisseur (380) de chacune desdites batteries présente une structure d'abaisseur de tension lors de la décharge dudit deuxième ensemble d'accumulateurs électrochimiques (302).

12. Installation électrique (1) selon la revendication 11, dans laquelle pour chacune desdites batteries :

    - ladite structure d'abaisseur de tension inclut un abaisseur de tension à découpage comprenant deux interrupteurs commandés (381, 382) connectés en série et aux bornes desquels la différence de potentiel du deuxième ensemble d'accumulateurs électrochimiques (302) est appliquée ;
    - ladite inductance (350) et ladite diode de roue-libre (360) appartenant à ladite structure d'abaisseur de tension à découpage ;
    - l'interrupteur (310) est connecté entre un noeud de connexion entre les interrupteurs commandés (321, 322) de l'abaisseur et ladite inductance (350).

13. Installation électrique (1) selon l'une quelconque des revendications précédentes, dans laquelle ladite deuxième branche de chacune desdites batteries comprend deux diodes de roue libre (341, 342) connectées en série.

14. Installation électrique (1) selon l'une quelconque des revendications précédentes, dans laquelle le dispositif de commande (330) est configuré pour que seulement un desdits interrupteurs (310) soit maintenu fermé en simultané après la détection d'un court-circuit.

## Patentansprüche

1. Elektrische Anlage (1), umfassend:

   - einen Schutzschalter (5), der eine Unterbrechungskapazität PdC und einen Auslösestrom Is aufweist,
   - eine Gleichspannungsquelle, die mindestens zwei elektrochemische Akkumulatorbatterien (3) aufweist, die parallel geschaltet sind, wobei die Spannungsquelle mit dem Schutzschalter in Reihe geschaltet ist;

   **dadurch gekennzeichnet, dass** die Summe der Kurzschlussströme der Batterien, die parallel geschaltet sind, größer als die Unterbrechungskapazität PdC des Schutzschalters (5) ist, wobei jede der Batterien Folgendes aufweist:

   - einen ersten Zweig, der die zwei elektrochemischen Akkumulatoren (300) der Batterie und einen Schalter (310), die in Reihe geschaltet sind, aufweist;
   - einen zweiten Zweig, der zu dem ersten Zweig parallel geschaltet ist und eine Freilaufdiode (340) aufweist;
   - ein Amperemeter (320), das den Strom misst, der von der Batterie abgegeben wird;
   - einen Steuerkreis (330), der konfiguriert ist, um einen Kurzschluss zu erkennen, wenn der Strom, der von einer Batterie abgegeben wird, größer als ein Schwellenwert ist;

   wobei die Steuerkreise konfiguriert sind, um nach dem Erkennen eines Kurzschlusses gleichzeitig mindestens die Mehrheit der Schalter (310) offen zu halten und um mindestens einen dieser Schalter zu schließen, um einen Strom anzulegen, der durch den Schutzschalter (5) fließt, der größer als der Is und kleiner als sein PdC ist.

2. Elektrische Anlage (1) nach Anspruch 1, wobei jede der Batterien (3) eine induktive Komponente (350) aufweist, die zwischen einer ersten und einer zweiten Ausgangsklemme dieser Batterie in Reihe geschaltet ist und mit dem ersten und dem zweiten Zweig in Reihe geschaltet ist.

3. Elektrische Anlage (1) nach Anspruch 2, wobei die Amperemeter (320) den Strom messen, der durch die induktive Komponente (350) fließt.

4. Elektrische Anlage (1) nach einem der vorhergehenden Ansprüche, wobei jeder der Steuerkreise (330) das Schließen seines Schalters (310) mit einem zeitlichen Versatz gegenüber dem Erkennen eines Kurzschlusses steuert, wobei dieser zeitliche Versatz für jeden der Steuerkreise verschieden ist.

5. Elektrische Anlage (1) nach einem der vorhergehenden Ansprüche, wobei der Auslösestrom Is des Schutzschalters (5) ein Auslösestrom für einen Kurzschluss von einer Dauer ist, die kürzer als 100 ms ist.

6. Elektrische Anlage (1) nach einem der vorhergehenden Ansprüche, umfassend mindestens 10 Batterien (3), die parallel geschaltet sind.

7. Elektrische Anlage (1) nach einem der vorhergehenden Ansprüche, umfassend eine Anzahl n von Batterien (3), die parallel geschaltet sind, und wobei diese Batterien jeweils einen Kurzschlussstrom Icci aufweisen, wobei die Unterbrechungskapazität PdC des Schutzschalters (5) mindestens 3 Mal kleiner als die Summe $\sum_{i=1}^{n} Icc_i$ der Kurzschlussströme dieser Batterien ist.

8. Elektrische Anlage nach einem der vorhergehenden Ansprüche, wobei der Schutzschalter eine Unterbrechungskapazität PdC von mindestens gleich 5 kA aufweist.

9. Elektrische Anlage (1) nach einem der vorhergehenden Ansprüche, umfassend ein Stromnetz, das mit der Gleichspannungsquelle in Reihe geschaltet ist und den Schutzschalter (5) aufweist, wobei das Stromnetz eine induktive Energie, die mindestens gleich 2.000 J ist, mit einem Strom, der es durchfließt, der gleich der Unterbrechungskapazität PdC des Schutzschalters (5) ist, speichert.

10. Elektrische Anlage (1) nach einem der vorhergehenden Ansprüche, wobei jede der Batterien (3) eine erste Anordnung von elektrochemischen Akkumulatoren, die in Reihe geschaltet sind (301), und eine zweite Anordnung von elektrochemischen Akkumulatoren, die in Reihe geschaltet sind (302), aufweist, wobei die elektrische Anlage ferner einen Gleichspannungswandler (380) aufweist, dessen Ausgangsspannung mit der ersten Anordnung von elektrochemischen Akkumulatoren (301) in Reihe geschaltet ist, wobei die zweite Anordnung von elektrochemischen Akkumulatoren (302) ihre Potentialdifferenz an eine Eingangsschnittstelle des Wandlers (380) anlegt.

11. Elektrische Anlage (1) nach Anspruch 10, wobei der Wandler (380) von jeder der Batterien eine Struktur eines Spannungsabwärtswandlers beim Entladen der zweiten Anordnung von elektrochemischen Akkumulatoren (302) aufweist.

12. Elektrische Anlage (1) nach Anspruch 11, wobei für jede der Batterien:

- die Struktur eines Spannungsabwärtswandlers einen Abwärts-Schaltspannungswandler aufweist, der zwei gesteuerte Schalter (381, 382) aufweist, die in Reihe geschaltet sind und an deren Klemmen die Potentialdifferenz der zweiten Anordnung von elektrochemischen Akkumulatoren (302) angelegt ist;
- wobei die induktive Komponente (350) und die Freilaufdiode (360) zu der Struktur des Abwärts-Schaltspannungswandlers gehören;
- der Schalter (310) zwischen einem Verbindungsknoten zwischen den gesteuerten Schaltern (321, 322) des Abwärtswandlers und die induktive Komponente (350) angeschlossen ist.

13. Elektrische Anlage (1) nach einem der vorhergehenden Ansprüche, wobei der zweite Zweig von jeder der Batterien zwei Freilaufdioden (341, 342) aufweist, die in Reihe geschaltet sind.

14. Elektrische Anlage (1) nach einem der vorhergehenden Ansprüche, wobei die Steuervorrichtung (330) konfiguriert ist, damit nur einer der Schalter (310) nach dem Erkennen eines Kurzschlusses gleichzeitig geschlossen gehalten wird.

**Claims**

1. Electrical installation (1), comprising:

- a circuit-breaker (5) having a breaking capacity, abbreviated to PdC, and a tripping current, abbreviated to Is, and
- a DC voltage source comprising at least two electrochemical accumulator batteries (3) connected in parallel, the voltage source being connected in series with the circuit-breaker; **characterized in that** the sum of the short-circuit currents of the batteries connected in parallel is higher than the breaking capacity PdC of the circuit-breaker (5), each of said batteries including:

- a first arm including the electrochemical accumulators (300) of the battery and a switch (310), which accumulators and switch are connected in series;
- a second arm connected in parallel with the first arm and including a flyback diode (340);

- an ammeter (320) measuring the current delivered by this battery; and
- a control circuit (330) configured to detect a short-circuit when the current delivered by a battery is higher than a threshold,

the control circuits being configured, after a short-circuit has been detected, to simultaneously keep at least most of said switches (310) open and to close at least one of said switches in order to apply a current passing through the circuit-breaker (5) higher than the Is and lower than its PdC.

2. Electrical installation (1) according to Claim 1, wherein each of said batteries (3) includes an inductive component (350) connected in series between first and second output terminals of this battery and connected in series with the first and second arms.

3. Electrical installation (1) according to Claim 2, wherein said ammeters (320) measure the current passing through said inductive component (350).

4. Electrical installation (1) according to any one of the preceding claims, wherein each of said control circuits (330) controls the closing of its switch (310) with a temporal shift relative to the detection of a short-circuit, this temporal shift being different for each of said control circuits.

5. Electrical installation (1) according to any one of the preceding claims, wherein the tripping current Is of the circuit-breaker (5) is a tripping current for a short-circuit of duration less than 100 ms.

6. Electrical installation (1) according to any one of the preceding claims, comprising at least 10 batteries (3) connected in parallel.

7. Electrical installation (1) according to any one of the preceding claims, comprising a number n of batteries (3) connected in parallel, and wherein each of these batteries has a short-circuit current $Icc_i$, the breaking capacity PdC of the circuit-breaker (5) being at least 3 times lower than the sum

$$\sum_{i=1}^{n} Icc_i$$

of the short-circuit currents of these batteries.

8. Electrical installation according to any one of the preceding claims, wherein said circuit-breaker has a breaking capacity PdC at least equal to 5 kA.

9. Electrical installation (1) according to any one of the preceding claims, comprising an electrical network connected in series to the DC voltage source and including said circuit-breaker (5), said electrical network storing an inductive energy at least equal to 2000 J when the current passing therethrough is equal to the breaking capacity PdC of the circuit-breaker (5).

10. Electrical installation (1) according to any one of the preceding claims, wherein each of said batteries (3) comprises a first set (301) of electrochemical accumulators connected in series, and a second set (302) of electrochemical accumulators connected in series, the electrical installation furthermore comprising a DC/DC converter (380) the output voltage of which is connected in series with said first set (301) of electrochemical accumulators, the second set (302) of electrochemical accumulators applying its potential difference to an input interface of the converter (380).

11. Electrical installation (1) according to Claim 10, wherein said converter (380) of each of said batteries has a step-down voltage regulator structure during the discharge of said second set of electrochemical accumulators (302).

12. Electrical installation (1) according to Claim 11, wherein for each of said batteries:

    - said step-down voltage regulator structure incorporates a switch-mode step-down voltage regulator comprising two controlled switches (381, 382) connected in series and to the terminals of which is applied the potential difference of the second set (302) of electrochemical accumulators;
    - said inductive component (350) and said flyback diode (360) belong to said switch-mode step-down voltage regulator structure; and
    - the switch (310) is connected between a connection node between the controlled switches (321, 322) of the step-down regulator and said inductive component (350).

13. Electrical installation (1) according to any one of the preceding claims, in which said second arm of each of said batteries comprises two flyback diodes (341, 342) connected in series.

14. Electrical installation (1) according to any one of the preceding claims, in which the control device (330) is configured so that only one of said switches (310) is kept closed simultaneously after detection of a short-circuit.

Fig.1

Fig.2

Fig.3

Fig.4

Fig.5

Fig.6

Fig.7

Fig.8

Fig.9

Fig.10

Fig.11

**EP 3 060 422 B1**

## RÉFÉRENCES CITÉES DANS LA DESCRIPTION

**Documents brevets cités dans la description**

- EP 2012072607 W